# EUROPEAN PATENT SPECIFICATION

(11) **EP 1 772 363 B1**
(45) Date of publication and mention of the grant of the patent: **17.02.2010**
(21) Application number: 06255181.7
(22) Date of filing: 06.10.2006
(51) Int. Cl.: B62K 11/14, B62J 17/00, B62J 23/00, B62J 6/18

(54) **Scooter type motorcycle**
Motorroller
Motocyclette de type scooter

(30) Priority: 07.10.2005 JP 2005294681; 25.09.2006 JP 2006258624
(43) Date of publication of application: 11.04.2007
(73) Proprietor: Yamaha Hatsudoki Kabushiki Kaisha, Iwata-shi, Shizuoka 438-8501 (JP)
(72) Inventor: Asai, Takayuki c/o Yamaha Hatsudoki Kabushiki Kaisha, Shizuoka-ken 438-8501 (JP); Morita, Youji c/o Yamaha Hatsudoki Kabushiki Kaisha, Shizuoka-ken 438-8501 (JP)
(74) Representative: Lamb, Martin John Carstairs

(56) References cited:
- DE-A1- 2 726 244
- FR-A1- 2 780 018
- JP-A- 9 193 865
- JP-A- 11 208 562
- JP-A- 2002 029 476
- US-A- 3 922 031
- US-A- 4 229 662
- US-A- 4 710 599
- US-A1- 2003 047 934
- US-B1- 6 225 584

## Description

### Technical Field

The present invention relates to a scooter type motorcycle having a cover member for covering a vehicle body constituting an outer appearance of the vehicle body.

### Background Art

An example of this type of the motorcycle is disclosed in patent publication number JP-A-2000-6872. In the motorcycle disclosed in this reference, a vehicle body cover member constituting an outer appearance of the vehicle body is formed. The vehicle body cover member includes a top cover fixed to a handle so as to rotate together with the handle and a front part cover fixed to the vehicle body so as to constitute the outer appearance of a front part of the vehicle body.

In addition, an operating switch (a handle-side electric component) disposed at a respective part of the vehicle body so as to operate a vehicle body-side electric component is disposed at the handle, and the operating switch is electrically connected to vehicle installation components through a wire harness. In other words, one end of the wire harness is fixed so as to rotate together with the handle, and the other end of the wire harness is fixed to the vehicle body.

However, according to the conventional motorcycle, since the wire harness is also disposed in the vicinity of the steering shaft at a joint part where the top cover is connected to the front part cover, it-is necessary to prevent the wire harness from engaging with the joint part and coming between the top cover and the front part cover and prevent excessive force from being applied to the wire harness when the vehicle is changing directions. Accordingly, the structure becomes complicated and the size, of the vehicle in a front-rear direction increases. Therefore, it is necessary to secure a sufficient clearance.

However, when the size of the vehicle in the front-rear direction increases, the riding space of the driver decreases in the motorcycle in which the driver ride the vehicle with legs put together, thereby disturbing a comfortable driving of the driver.

Accordingly, it is an object of the invention to provide a motorcycle having a vehicle body cover member capable of disposing a wire harness of a handle side electric component without decreasing the riding space of the driver.

FR 2780018 discloses a scooter type motorcycle according to the preamble of claim 1.

### Summary of the Invention

According to the present invention there is provided a scooter type motorcycle comprising: a steering shaft rotatably supported by a head pipe constituting a vehicle body frame; a handle bar fixed to the steering shaft so as to rotate integrally with the steering shaft; a foot board disposed between the handle bar and a driver seat so as to accommodate feet of a driver; a handle-side electric component provided in the handle bar and electrically connected to a vehicle body-side electric component provided in the vehicle body through a wire harness; and a front part cover member which accommodates the head pipe and the wire harness therein, wherein the front part cover member is fixed to the handle bar so as to rotate therewith.

Preferably, the front part cover member is constituted by a front-side cover part and a rear-side cover part.

Preferably, when viewed from above an extension line of the central axis of the steering shaft, the front part cover member covers at least a portion of the upper part of the head pipe.

Preferably, the handle bar is disposed at an upper position than the upper end of the front part cover member.

Preferably, the head pipe is disposed at the vehicle body frame so that the lower end of the steering shaft is positioned further forward from the upper end of the steering shaft with respect to the vehicle, and the front part cover member is formed so that the size of the vehicle in a front-rear direction at the upper end side of the steering shaft is smaller than the size of the vehicle in a front-rear direction at the lower end side of the steering shaft.

Preferably, the front part cover member is formed so that the distance in a horizontal direction between a trailing edge of the cover of the vehicle body and the upper end of the steering shaft is smaller than the distance in a horizontal direction between a trailing edge of the cover of the vehicle body and the lower end of the steering shaft.

Preferably, the vehicle further includes a pair of front forks supporting a front wheel, and the size of the cover member in the width direction of the vehicle is substantially equal to the distance between the outer edges of the pair of front forks.

Preferably, the vehicle further includes a under bracket fixedly holding the front forks and fixed to the lower end of the steering shaft, and the front part cover member covers the upper part of the under bracket.

Preferably, the vehicle further includes a handle fixing member disposed at the upper end of the steering shaft and fixed to the steering shaft, a handle constituted by the handle bar fixed to the handle fixing member, a under bracket fixed to the lower end of the steering shaft, and an auxiliary frame having an upper end thereof fixed to the handle and a lower end thereof fixed to the under bracket, wherein the front part cover member is fixed to the auxiliary frame and supported so as to rotate together with the handle.

Preferably, the vehicle body-side electric component is disposed at an inner part of the front part cover member together with the wire harness extending from the vehicle body-side electric component.

Preferably, the vehicle body-side electric component is a main switch, and the main switch is disposed further rightward from the steering shaft with respect to the vehicle.

Preferably, the head pipe is disposed at the vehicle body frame so that the lower end of the steering shaft is positioned further forward from the upper end of the steering shaft with respect to the vehicle, the vehicle body-side electric component is a main switch, and the main switch is disposed at a lower position than the handle.

Preferably, when viewed from above the vehicle, the main switch is disposed so that at least a portion of the main switch is positioned further forward from the trailing edge of the handle bar with respect to the vehicle.

Preferably, when viewed from above an extension line of the center axis of the steering shaft, the main switch is disposed so that at least a portion of the main switch is positioned further forward from the trailing edge of the handle bar.

Preferably, the vehicle body-side electric component is a main switch, and the main switch is disposed at an upper position upper or a lower part than a fixing part where the handle fixing member is fixed to the steering shaft.

Preferably, the vehicle body-side electric component is a main switch, and an operating part of the main switch is disposed at a predetermined angle to the center axis of the steering shaft.

Preferably, the operating part is disposed to face a driver.

Preferably, the vehicle further includes a pair of front forks supporting a front wheel; and a under bracket fixedly holding the front forks and fixed to the lower end of the steering shaft, wherein the vehicle body-side electric component is a headlight, and the headlight is disposed at a lower front part of an outer surface of the front part cover member covering the upper part of the under bracket.

Preferably, the vehicle body-side electric component is a meter unit, and the meter unit is disposed at an upper front part of the lateral surface of the front part cover member.

Advantageously, since the front part cover member constituting the vehicle body cover is fixed so as to rotate together with the handle, it is possible to decrease the clearance between the front part cover and the wire harnesses extended from the handle side electric component, or discretely dispose the wire harness without binding and accommodating the wire harnesses in the inner part of the front part cover member. Accordingly, it is possible to decrease the size of the front part cover member in the front-rear direction of the vehicle, thereby securing sufficient riding space.

### Brief Description of the Drawings

The present invention will now be described, by way of example only, with reference to the accompanying drawings, in which:
Fig. 1 is a side view of a motorcycle according to an embodiment of the invention;
Fig. 2 is a rear-side view of a handle device according to the invention when viewed from a driver side;
Fig. 3 is a right side view showing the handle device according to the invention;
Fig. 4 is a right side view showing the state that a front cover of the handle device according to the invention is removed;
Fig. 5 is a front view showing the state that a front cover of the handle device according to the invention is removed;
Fig. 6 is a sectional view showing relevant parts when a fixing part of a main switch 21 is in a handle lock state; and
Fig. 7 is a top view showing a handle device according to the invention.

### Detailed Description of the Invention

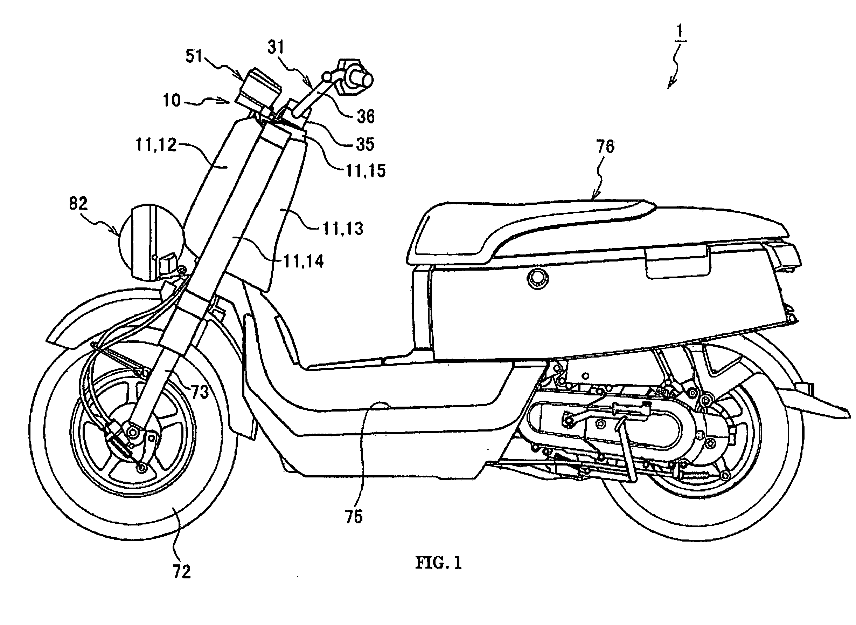

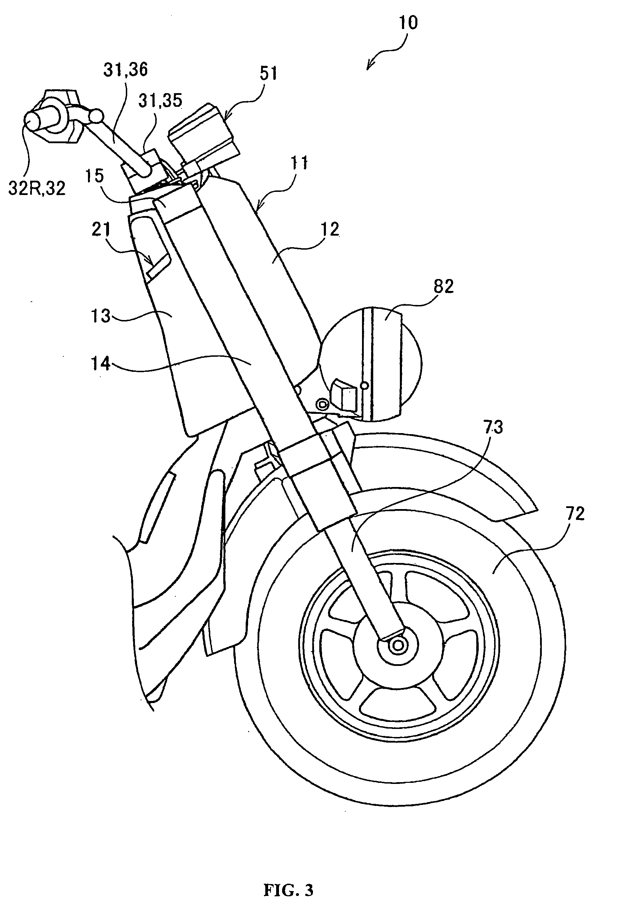

As shown in Figs. 1 to 3, a motorcycle 1 according to the embodiment is applied to a handle device 10 of the motorcycle 1, also called "scooter", in which the driver sits on a seat 76 with legs put together on a foot board 75 and regulates speed by a continuously variable transmission in response to an output of an engine (not shown).

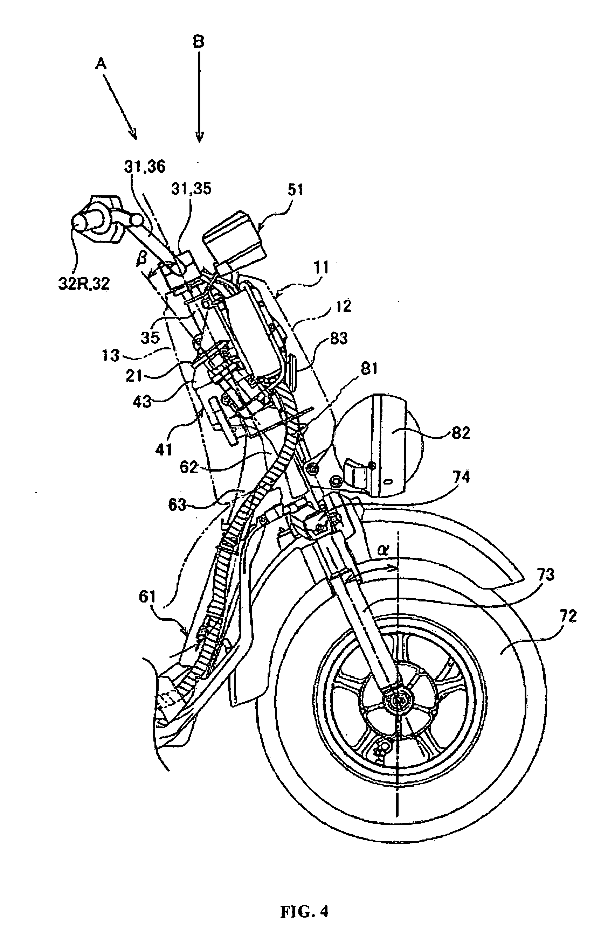

The handle device 10 according to the embodiment, as shown in Fig. 4, includes a head pipe 62 constituting a vehicle body frame 61, a steering shaft 71 rotatably supported by the head pipe 62, a handle bar 36 fixed to a bracket handle 35 as a handle fixing member at the upper end of the steering shaft 71 so as to rotate integrally with the steering shaft 71, a pair of front forks 73 rotatably supporting a front wheel 72 at a lower end thereof, an under bracket 74 fixedly holding the upper end of the front forks 73 and fixed to a lower end of the steering shaft 71, a stay headlight 41 which is fixed to the bracket handle 35 and the under bracket 74 and acts as an auxiliary frame capable of rotating together with the handle 31, and a main switch 21 of the vehicle, wherein the vehicle is covered by the front cover 11 as a front part cover member which is fixed so as to rotate together with the handle bar 36.

The head pipe 62 is a tubular member disposed at an upper front end of a down tube 63 constituting the vehicle body frame 61 and is slanted toward the rear side of the vehicle with respect to the vertical direction so that the steering shaft 71 passing through the inner part thereof has a predetermined caster angle α.

The steering shaft 71 passes through the head pipe 62 and is rotatably supported by bearings (not shown) disposed at upper and lower ends of the head pipe 62 so that the lower end of the steering shaft is positioned further forward from the upper end of the steering shaft with respect to the vehicle.

The under bracket 74 has a V-shaped form opened toward the front of the vehicle and a V-shaped form opened toward the lower side of the vehicle. Further, the lower end of the steering shaft 71 is fixedly held in a crotch part of the under bracket 74, and the upper ends of the front forks 73 are fixed to a respective one of the front ends.

The bracket handle 35 constitutes a handle 31 together with the handle bar 36, and is disposed at the upper end of the steering shaft 71 so as to act as a base for fixing the handle bar 36 and a meter unit 51. A tubular split clamp part is formed at a lower end of the bracket handle 35 so as to cover an upper outer circumference of the steering shaft 71 and be tightened with a bolt and a nut, whereby the bracket handle 35 is fixed to the upper end of the steering shaft 71. The meter unit 51 is one of the vehicle body side electric components and accommodates a speed meter 52, a fuel meter 53, an odometer 54 and a warning light 55 therein as a single unit.

The handle bar 36 is made of a pipe material formed into a substantially U-shaped form. A center part of the handle bar is fixed to the bracket handle 35 so that the central part of the handle bar is positioned further upward from the upper end of the front cover 11 to be described later. The handle bar has a grip 32 at both ends thereof which is gripped by a driver. A throttle cable 33 connected to a throttle of an engine is disposed in a right side grip 32R. When the right side grip 32R rotates, a throttle opening is adjusted. Further, a starter switch 34 of the engine is disposed at a base end part of the right side grip 32R. When the starter switch 34 is pressed in the state where the main switch 21 described later is positioned in an engine operation permitting position, the engine starter operates to start the engine.

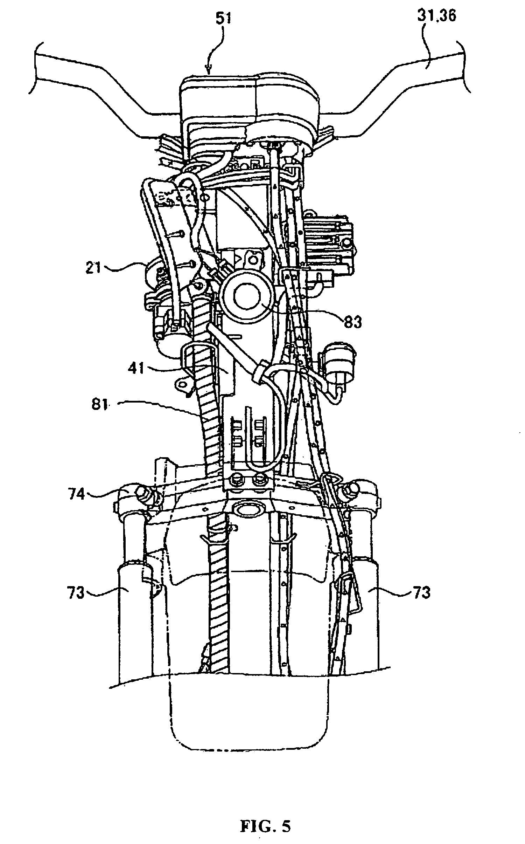

As shown in Fig. 5, the stay headlight 41 serves as an auxiliary frame and has a lower end thereof fixed to a front surface of the under bracket 74 and an upper end thereof fixed to a front surface of the bracket handle 35, i.e., a front surface of the handle 31. A headlight 82 as one of the vehicle body side electric components is fixed to the stay headlight 41 at a front side of the vehicle and the headlight 82 is disposed at a lower front part of a later surface of a front side cover part 12 covering the under bracket, which is described later. Further, various vehicle body side electric components including a horn 83 is disposed in an inner part of a front cover 11 to be described later. Further, the main switch 21 as one of the vehicle body side electric components is fixed to a main switch fixing part 42 provided in the stay headlight 41. More specifically, the main switch 21 is fixed to the steering shaft 71 through the stay headlight 41 and rotates together with the handle 31.

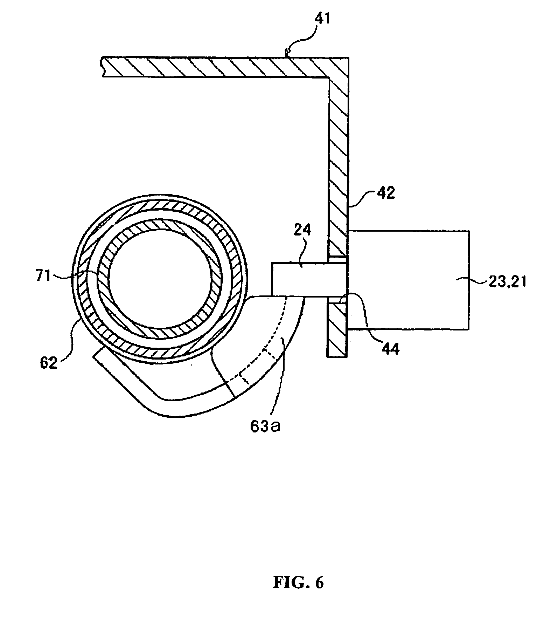

The main switch fixing part 42, as shown in Fig. 6, is provided with a pin through hole 44 through which a lock pin 24 to be described later can pass. A bracket 63a is attached to the head pipe 62 and defines an edge which is adapted to be engaged by the lock pin 24. When the lock pin 24 engages the bracket 63a, the steering shaft 71 having the stay headlight 41 fixed thereto is prevented from rotating, whereby the handle 31 is locked.

The main switch 21 is provided with a cylinder lock (not shown) from and into which a key (not shown) can be removed and inserted and the cylinder lock in which a key satisfying predetermined unlock requirements is inserted into a key hole 22 acts as the operating part 25. When the cylinder lock is unlocked by a key, the cylinder lock can be rotated to move from a key removing and inserting position to a handle lock position or an engine operation permitting position.

The main switch 21 is positioned further rightward from the steering shaft 71 with respect to the vehicle in a vehicle erect state and positioned further downward from the handle 31, and the key hole 22 is disposed between the handle 31 and the under bracket 74. Further, the main switch 21, as shown in Fig. 4, is positioned further forward from a rear edge of the handle 31 with respect to the vehicle when viewed from above an extension line of the center axis of the steering shaft 71 (viewed from an arrow A), and the key hole 22 is positioned toward a driver so as to have predetermined angle β with respect to the center axis of the steering shaft 71.

The handle lock mechanism 23 is connected to the cylinder lock, and the lock pin 24 is accommodated in the main switch 21 in the key removing and inserting position and is projected from the main switch 21 in the handle lock position as shown in Fig. 6. Accordingly, the lock pin 24 engages with the head pipe 62 so as to prevent the steering shaft 71 from rotating.

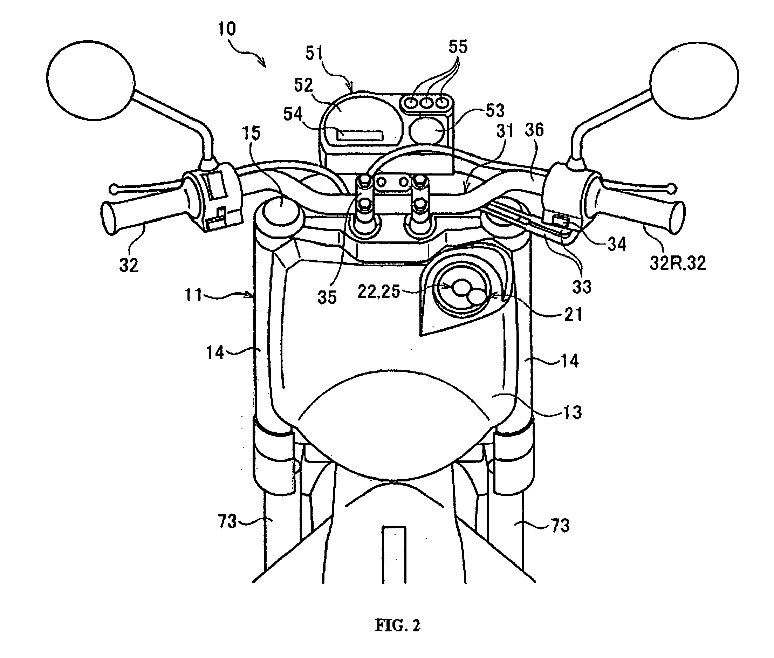

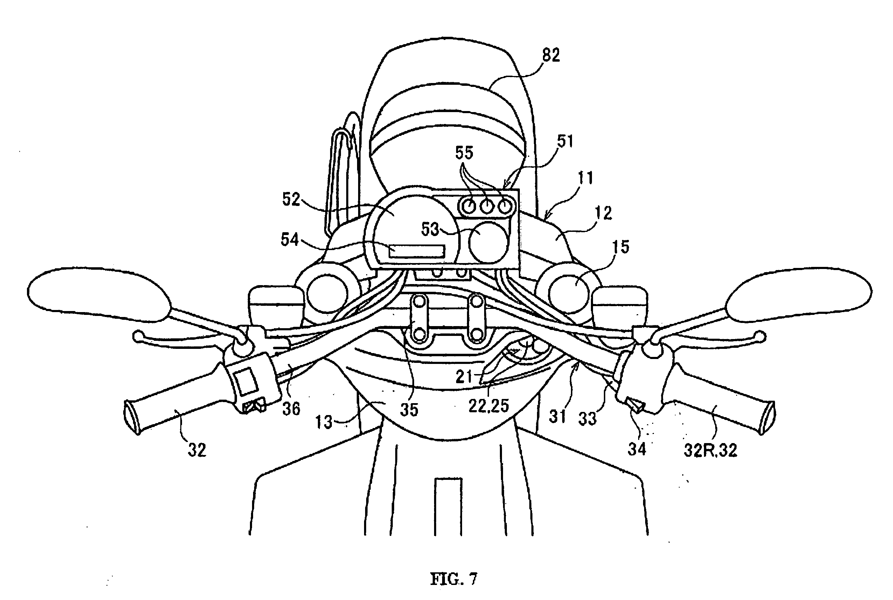

The front cover 11, as shown in Figs. 2 to 4 and Fig. 7, is constructed by a front side cover part 12, a rear side cover part 13, a side cover part 14 and an upper cover 15. The front cover 11 is fixed to a cover fixing part 43 provided in the stay headlight 41 so as to rotate together with the handle 31. For example, the rear side cover part 13 is fixed to the steering shaft 71 through the stay headlight 41 by threadably mounting a boss part (not shown) protruding from the back side on the cover fixing part 43.

In addition, the upper part of the under bracket is covered by the front side cover part 12, the rear side cover part 13, the side cover part 14 and the upper cover 15 cover. The head pipe 62, the steering shaft 71, the wire harness 81 extended from the main switch 21, the meter unit 51, and the like serving as the vehicle body side electric component, and throttle cable 33 and the like are accommodated in a space defined by the inner part of the front cover 11. In addition, the front cover 11 covers an upper part of the head pipe 62 when view from above an extension line of the center axis of the steering shaft so that the size of the vehicle in the front-rear direction at the upper side thereof is smaller than the size of the vehicle in the front-rear direction at the lower side thereof. More specifically, the size of the vehicle in a front-rear direction at the upper end side of the steering shaft 71 is smaller than the size of the vehicle in a front-rear direction at the lower end side of the steering shaft 71.

The main switch 21 and various wire harness or the like are accommodated in an upper side of the rear side cover part 13, and the key hole 22 of the main switch 21 is disposed on the right side of the rear side cover part. Further, the upper side of the rear side cover part 13 is formed by a curved surface with a large curvature radius which is convex toward the rear side of the vehicle, and the key hole 22 which is made concave is disposed at the back side of the rear side cover part 13 so that the main switch 21 does not protrude from the curved surface to the driver side. This prevents the main switch 21 and the key inserted into the key hole 22 from disturbing the driver in the state where the vehicle is erected and in the state where the handle 31 is turned.

A lower side of the rear side cover part 13 covers a joint part where the head pipe 62 and the down tube 63 are connected to each other so that the lower side of the rear side cover part is formed into a shape formed by overlapping an arc around the steering shaft 71. Further, although the part covering the joint part where the head pipe 62 and the down tube 63 are connected to each other is the most protruding part toward a driver in the vehicle erect state and the handle 31 turning state, the part is disposed at a position sufficiently apart from a driver and is positioned between the driver' s legs, and thus it does not disturb the driver during riding.

The side cover part 14 is disposed at an edge part of the front cover 11 in the width direction of the vehicle so as to cover the outer edge of the pair of the front forks 73 along the pair of the front forks 73 while covering an upper part of the extension line of the front forks 73.

In the above-described structure, since the front cover 11 is fixed so as to rotate together with the handle, it is possible to decrease the clearance between the front cover 11 and the wire harnesses 81 extended from the handle side electric component, or discretely dispose the wire harness without binding and accommodating the wire harnesses in the inner part of the front cover 11. Accordingly, it is possible to decrease the size of the front cover 11 in the front-rear direction of the vehicle, thereby securing sufficient riding space.

Since the front cover 11 includes the front side cover part 12 and the rear side cover part 13, it is possible to simplify an assembling operation of the front cover 11 and a disposing operation of the wire harness 81.

Since the front cover 11 covers at least a portion of the upper part of the head pipe 62 when viewed from above an extension line of the center axis of the steering shaft 71, the inner part of the front cover 11 is lowered when viewed from the driver in a riding state, whereby the driver can ride the vehicle in a comfortable manner.

Since the handle bar 36 is disposed further upward from the upper end of the front cover 11, the part adjacent to the handle bar 36 is not covered by the front cover 11. Accordingly, it is possible to prevent widening of the part adjacent to the handle 31 and prevent narrowing of the riding space.

Since the lower end of the steering shaft 71 is disposed further forward from the upper end of the steering shaft with respect to the vehicle (has a caster angle), it is possible to secure steering stability. Moreover, since the size of the front cover 11 in the front-rear direction at an upper side thereof is smaller than the size of the front cover 11 in the front-rear direction at a lower side thereof, it is possible to secure sufficient riding space of the driver.

Although the upper part of the front cover 11 has an outer appearance having a compact size, the lower part of the front cover 11 can cover the down tube 63 serving as the vehicle body frame 61 extended from the lower end of the head pipe 62 to the rear side of the vehicle.

Since the edge part of the front cover 11 in the width direction of the vehicle is disposed so as to cover the outer edge of the pair of the front forks 73 along the pair of the front forks 73 by means of the side cover part 14, it is possible to prevent wind from getting into the lower part of the driver in the riding state.

Since the front cover 11 covers the upper part of the under bracket 74, it is possible to dispose the wire harness 81 in a large space defined between the upper part of the under bracket 74 and the outer edge of the front fork 73. Accordingly, it is possible to dispose the wire harness 81 while preventing excessive force being applied to the wire harness.

Since the front cover 11 is fixed to the handle and the under bracket 74, it is possible to fix the front cover 11 so as to rotate together with the handle 31.

Since the vehicle body side electric component and the wire harness 81 extended from the vehicle body side electric component are disposed at a redundant space defined in the inner part of the front cover 11, it is unnecessary to secure a space for the vehicle body side electric component. Moreover, since it is possible to dispose various vehicle body side electric components in the inner part of the front cover 11, it is possible to improve operability of an assembly task and a maintenance task.

Since the main switch 21 is disposed further rightward from the steering shaft 71 with respect to the vehicle, the operability of the main switch 21 is not degraded.

Since the main switch 21 is disposed at the front cover 11 covering the head pipe 62 so that the main switch 21 is positioned further downward from the handle bar 36, it is possible to prevent widening of the part adjacent to the handle and prevent narrowing of the riding space. Moreover, since the lower end of the steering shaft 71 is disposed further forward from the upper end of the steering shaft with respect to the vehicle (has a caster angle), it is possible to form the front cover 11 together with the steering shaft 71 such that the lower end of the front cover 11 is positioned further forward from the upper end of the front cover 11 with respect to the vehicle. Accordingly, the driving space of the driver is not narrowed even when the main switch 21 is disposed in the inner part of the front cover 11.

Since the main switch 21 is disposed so that at least a portion of the main switch 21 is positioned further forward from the rear edge of the handle when viewed from above the extension line of the center axis of the steering shaft 71, it is not only possible to dispose the main switch 21 at a position where the driving space of the driver is not narrowed, but also to dispose the main switch 21 at a position where the driver can easily operate the main switch even when the driver turns the handle 31.

Although the fixing part fixing the bracket handle 35 to the steering shaft 71 is formed with a greater size in the diameter direction than that of other parts in order to fix the bracket handle 35 to the steering shaft 71, since the main switch 21 is disposed at a position upper or lower than the fixing part, it is possible to prevent the widening of the upper part of the front cover 11 including parts adjacent to the fixing part.

Since the operating part 25 of the main switch 21 is disposed at a predetermined angle with respect to the steering shaft 71, it is possible to dispose the operating part 25 of the main switch 21 at a position where the driver can easily operate the operating part even when the driver turns the handle 31.

Since the operating part 25 of the main switch 21 is disposed at a predetermined angle with respect to the steering shaft 71 and the operating part is disposed to face the driver, it is possible to dispose the operating part 25 of the main switch 21 at a position where the driver can easily operate the operating part even when the driver turns the handle.

Since the headlight serving as the vehicle body side electric component is disposed at a lower front part of an outer surface of the front cover 11 covering the under bracket 74, it is possible to prevent the widening of the upper part of the front cover 11.

Since the meter unit 51 serving as the vehicle body side electric component is disposed at an upper front part of an outer surface of the front cover 11, it is possible to prevent the widening of the upper part of the front cover 11.

In addition, according to the embodiment, the main switch 21 is positioned further forward from the handle 31 when viewed from above an extension line of the center axis of the steering shaft 71. However, even when the main switch 21 is disposed so that at least one part thereof is positioned further forward from the handle 31 with respect to the vehicle when viewed from above the vehicle (viewed from an arrow B in Fig. 4), it is possible to obtain similar operational effect to the above-mentioned case.

Furthermore, in the motorcycle 1 according to the embodiment, as shown in Fig. 1, the center part of the foot board 75 in the width direction of the vehicle protrudes upward along the front-rear direction of the vehicle so that the driver can step on the board. However, even when the foot board has a planar shape without having the protruded part, it is possible to obtain similar operational effect to the above-mentioned case.

## Claims

1. A scooter type motorcycle (1) comprising:
a steering shaft (71) rotatably supported by a head pipe (62) constituting a vehicle body frame (61);
a handle bar (36) fixed to the steering shaft (71) so as to rotate integrally with the steering shaft (71);
a foot board (75) disposed between the handle bar (36) and a driver seat (76) so as to accommodate feet of a driver;
a handle-side electric component (34) provided on the handle bar (36) and electrically connected to a vehicle body-side electric component (21,51,82,83) provided in the vehicle body through a wire harness (81); and
a front part cover member (11) which accommodates the head pipe (62) and the wire harness (81) therein,
**characterized in that** the front part cover member is fixed to the handle bar (36) so as to rotate therewith.

2. The motorcycle (1) according to Claim 1,
wherein the front part cover member (11) is constituted by a front-side cover part (12) and a rear-side cover part (13) .

3. The motorcycle (1) according to Claim 1 or 2,
wherein, when viewed from above an extension line of the central axis of the steering shaft (71), the front part cover member (11) covers at least a portion of an upper part of the head pipe (62).

4. The motorcycle (1) according to Claim 1, 2 or 3,
wherein the handle bar (36) is disposed above an upper end of the front part cover member (11).

5. The motorcycle (1) according to any preceding Claim,
wherein the head pipe (62) is disposed at the vehicle body frame (61) so that a lower end of the steering shaft (71) is positioned further forward from an upper end of the steering shaft (71) with respect to the vehicle, and
wherein the front part cover member (11) is formed so that the size of the vehicle in a front-rear direction at the upper end side of the steering shaft (71) is smaller than the size of the vehicle in a front-rear direction at the lower end side of the steering shaft (71).

6. The motorcycle (1) according to any preceding Claim,
wherein the front part cover member (11) is formed so that the distance in a horizontal direction between a trailing edge of the front part cover member (11) of the vehicle body and an upper end of the steering shaft (71) is smaller than the distance in a horizontal direction between a trailing edge of the front part cover member (11) of the vehicle body and a lower end of the steering shaft (71).

7. The motorcycle (1) according to any preceding Claim,
wherein the vehicle further includes a pair of front forks (73) supporting a front wheel (72), and
wherein the size of the front part cover member (11) in the width direction of the vehicle is substantially equal to the distance between the outer edges of the pair of front forks (73).

8. The motorcycle (1) according to Claim 7,
wherein the vehicle further includes an under bracket (74) fixedly holding the front forks (73) and fixed to a lower end of the steering shaft (71), and
wherein the front part cover member (11) covers an upper part of the under bracket (74).

9. The motorcycle (1) according to any preceding Claim, further comprising:
a handle fixing member (35) disposed at an upper end of the steering shaft (71) and fixed to the steering shaft (71),
a handle (31) constituted by the handle bar (36) fixed to the handle fixing member (35),
an under bracket (74) fixed to a lower end of the steering shaft (71), and
an auxiliary frame (41) having an upper end thereof fixed to the handle (31) and a lower end thereof fixed to the under bracket (74),
wherein the front part cover member (11) is fixed to the auxiliary frame (41) and supported so as to rotate together with the handle (31).

10. The motorcycle (1) according to any preceding Claim,
wherein the vehicle body-side electric component (21) is disposed at an inner part of the front part cover member (11) together with the wire harness (81) extending from the vehicle body-side electric component (21).

11. The motorcycle (1) according to any preceding Claim,
wherein the vehicle body-side electric component comprises a main switch (21).

12. The motorcycle according to Claim 11,
wherein the main switch (21) is disposed laterally of the steering shaft (71) with respect to the vehicle.

13. The motorcycle (1) according to Claim 11 or 12,
wherein the main switch (21) is disposed at a lower position than the handle bar (36).

14. The motorcycle (1) according to Claim 11, 12 or 13,
wherein, when viewed from above the vehicle, the main switch (21) is disposed so that at least a portion of the main switch (21) is positioned further forward from the trailing edge of the handle bar (36) with respect to the vehicle.

15. The motorcycle (1) according to any one of Claims 11 to 14,
wherein, when viewed from above an extension line of the centre axis of the steering shaft (71), the main switch (21) is disposed so that at least a portion of the main switch (21) is positioned further forward from the trailing edge of the handle bar (36).

16. The motorcycle (1) according to any one of Claims 11 to 15,
wherein the main switch (21) is disposed at an upper position upper or a lower part than a fixing part where the handle fixing member (35) is fixed to the steering shaft (71).

17. The motorcycle (1) according to any one of Claims 11 to 16,
wherein an operating part (25) of the main switch (21) is disposed at a predetermined angle to the centre axis of the steering shaft (71).

18. The motorcycle (1) according to Claim 17,
wherein the operating part (25) is disposed to face a driver.

19. The motorcycle (1) according to any preceding Claim, further comprising:
a pair of front forks (73) supporting a front wheel (72); and
a under bracket (74) fixedly holding the front forks (73) and fixed to a lower end of the steering shaft (71),
wherein the vehicle body-side electric component comprises a headlight (83), and
wherein the headlight (83) is disposed at a lower front part of an outer surface of the front part cover member (11) covering an upper part of the under bracket (74).

20. The motorcycle (1) according to any preceding Claim,
wherein the vehicle body-side electric component comprises a meter unit (51), and
wherein the meter unit (51) is disposed at an upper front part of the lateral surface of the front part cover member (11) .

21. The motorcycle (1) according to any preceding Claim,
wherein the front part cover member (11) constitutes an outer appearance of a front part of the vehicle body.

## Patentansprüche

1. Motorroller (1) umfassend:
eine Lenkwelle (71), die drehbar von einem Kopfrohr (62) getragen wird wobei ein Fahrzeugrahmen (61) gebildet wird;
eine Lenkstange (36), die so an der Lenkwelle (71) befestigt ist, dass sie sich komplett mit der Lenkwelle (71) dreht;
ein Fussbrett (75), das zwischen der Lenkstange (36) und einem Fahrersitz (76) angeordnet ist, um die Füsse des Fahrers aufzunehmen;
ein griffseitiges elektrisches Bauelement (34), das an der Lenkstange (36) bereitgestellt ist und mit einem körperseitigen elektrischen Bauelement (21, 51, 82, 83) des Fahrzeugs, das im Fahrzeugkörper durch einen Kabelbaum (81) hindurch bereitgestellt ist, elektrisch verbunden ist; und
ein vorderes Abdeckungselement (11), das das Kopfrohr (62) und den Kabelbaum (81) darin aufnimmt,
**dadurch gekennzeichnet, dass** das vordere Abdeckungselement so an der Lenkstange (36) befestigt ist, dass es sich mit dieser dreht.

2. Motorroller (1) nach Anspruch 1,
wobei das vordere Abdeckungselement (11) aus einem vorderen Abdeckungsteil (12) und einem hinteren Abdeckungsteil (13) besteht.

3. Motorroller (1) nach Anspruch 1 oder 2,
wobei, wenn es von oberhalb einer Verlängerungslinie der zentralen Achse der Lenkwelle (71) betrachtet wird, das vordere Abdeckungselement (11) mindestens einen Teil eines oberen Teils des Kopfrohrs (62) bedeckt.

4. Motorroller (1) nach Anspruch 1, 2 oder 3,
wobei die Lenkstange (36) oberhalb eines oberen Endes des vorderen Abdeckungselements (11) angebracht ist.

5. Motorroller (1) nach irgendeinem der vorhergehenden Ansprüche,
wobei das Kopfrohr (62) am Fahrzeugrahmen (61) angebracht ist, so dass ein unteres Ende der Lenkwelle (71) weiter vorne von einem oberen Ende der Lenkwelle (71) bezüglich des Fahrzeugs angebracht ist, und
wobei das vordere Abdeckungselement (11) so gebildet ist, dass die Grösse des Fahrzeugs in einer Vorne-Hinten-Richtung an der oberen Endseite der Lenkwelle (71) geringer ist als die Grösse des Fahrzeugs in einer Vome-Hinten-Richtung an der unteren Endseite der Lenkwelle (71).

6. Motorroller (1) nach irgendeinem der vorhergehenden Ansprüche,
wobei das vordere Abdeckungselement (11) so gebildet ist, dass die Entfernung in einer horizontalen Richtung zwischen einer Hinterkante des vorderen Abdeckungselements (11) des Fahrzeugkörpers und einem oberen Ende der Lenkwelle (71) geringer ist als die Entfernung in einer horizontalen Richtung zwischen einer Hinterkante des vorderen Abdeckungselements (11) des Fahrzeugkörpers und einem unteren Ende der Lenkwelle (71).

7. Motorroller (1) nach irgendeinem der vorhergehenden Ansprüche,
wobei das Fahrzeug ferner ein Paar Vordergabeln (73) umfasst, die ein Vorderrad (72) tragen, und
wobei die Grösse des vorderen Abdeckungselements (11) in der Breitenrichtung des Fahrzeugs im Wesentlichen gleich der Richtung zwischen den Aussenrändern des Paars Vordergabeln (73) ist.

8. Motorroller (1) nach Anspruch 7,
wobei das Fahrzeug ferner eine untere Gabelbrücke (74) umfasst, die die Vordergabeln (73) festhält und die an einem unteren Ende der Lenkwelle (71) befestigt ist, und
wobei das vordere Abdeckungselement (11) einen oberen Teil der unteren Gabelbrücke (74) bedeckt.

9. Motorroller (1) nach irgendeinem der vorhergehenden Ansprüche, ferner umfassend:
ein Griffbefestigungselement (35), das an einem oberen Ende der Lenkwelle (71) angebracht ist und an der Lenkwelle (71) befestigt ist,
einen Griff (31), der von der Lenkstange (36), die am Griffbefestigungselement (35) befestigt ist, gebildet wird,
eine untere Gabelbrücke (74), die an einem unteren Ende der Lenkwelle (71) befestigt ist, und
einen zusätzlichen Rahmen (41) mit einem oberen am Griff (31) befestigten Ende und einem unteren an der unteren Gabelbrücke (74) befestigten Ende,
wobei das vordere Abdeckungselement (11) am zusätzlichen Rahmen (41) befestigt ist und so getragen wird, dass es sich zusammen mit dem Griff (31) dreht.

10. Motorroller (1) nach irgendeinem der vorhergehenden Ansprüche,
wobei das körperseitige elektrische Bauelement (21) an einem inneren Teil des vorderen Abdeckungselements (11) zusammen mit dem Kabelbaum (81), der sich vom körperseitigen elektrischen Bauelement (21) aus erstreckt, angebracht ist.

11. Motorroller (1) nach irgendeinem der vorhergehenden Ansprüche,
wobei das körperseitige elektrische Bauelement einen Hauptschalter (21) umfasst.

12. Motorroller (1) nach Anspruch 11,
wobei der Hauptschalter (21) seitlich der Lenkwelle (71) bezüglich des Fahrzeugs angebracht ist.

13. Motorroller (1) nach Anspruch 11 oder 12,
wobei der Hauptschalter (21) an einer tieferen Position als die Lenkstange (36) angebracht ist.

14. Motorroller (1) nach Anspruch 11, 12 oder 13,
wobei, wenn er von oberhalb des Fahrzeugs betrachtet wird, der Hauptschalter (21) so angebracht ist, dass mindestens ein Teil des Haupschalters (21) weiter vorne von der Hinterkante der Lenkstange (36) bezüglich des Fahrzeugs angebracht ist.

15. Motorroller (1) nach irgendeinem der Ansprüche 11 bis 14,
wobei, wenn er von oberhalb einer Verlängerungslinie der zentralen Achse der Lenkwelle (71) betrachtet wird, der Haupschalter (21) so angebracht ist, dass mindestens ein Teil des Haupschalters (21) weiter vorne von der Hinterkante der Lenkstange (36) positioniert ist.

16. Motorroller (1) nach irgendeinem der Ansprüche 11 bis 15,
wobei der Hauptschalter (21) an einer oberen Position angebracht ist, die höher oder tiefer ist als ein Befestigungsteil, wo das Griffbefestigungselement (35) an der Lenkwelle (71) befestigt ist.

17. Motorroller (1) nach irgendeinem der Ansprüche 11 bis 16,
wobei ein Antriebsteil (25) des Hauptschalters (21) in einem vorherbestimmten Winkel zur zentralen Achse der Lenkwelle (71) angebracht ist.

18. Motorroller (1) nach Anspruch 17,
wobei der Antriebsteil (25) angebracht ist, um einem Fahrer gegenüberzuliegen.

19. Motorroller (1) nach irgendeinem der vorhergehenden Ansprüche, ferner umfassend:
ein Paar Vordergabeln (73), die ein Vorderrad (72) tragen; und
eine untere Gabelbrücke (74), die die Vordergabeln (73) festhält und die an einem unteren Ende der Lenkwelle (71) befestigt ist,
wobei das körperseitige elektrische Bauelement des Fahrzeugs einen Scheinwerfer (83) umfasst, und
wobei der Scheinwerfer (83) an einem unteren Vorderteil einer äusseren Fläche des vorderen Abdeckungselements (11), das einen oberen Teil der unteren Gabelbrücke (74) bedeckt, angebracht ist.

20. Motorroller (1) nach irgendeinem der vorhergehenden Ansprüche,
wobei das körperseitige elektrische Bauelement des Fahrzeugs eine Messeinheit (51) umfasst,
wobei die Messeinheit (51) an einem oberen Vorderteil der Seitenfläche des vorderen Abdeckungselements (11) angebracht ist.

21. Motorroller (1) nach irgendeinem der vorhergehenden Ansprüche,
wobei das vordere Abdeckungselement (11) ein äusseres Erscheinungsbild eines Vorderteils des Fahrzeugkörpers bildet.

## Revendications

1. Motocycle de type scooter (1) comprenant:
un arbre de direction (71), supporté de manière rotative par un tuyau d'amenée (62) constituant une carrosserie (61);
une barre de manoeuvre (36) fixée à l'arbre de direction (71) afin de tourner intégralement avec l'arbre de direction (71);
un marchepied (75), disposé entre la barre de manoeuvre (36) et un siège conducteur (76) pour y accueillir les pieds d'un utilisateur;
un composant électrique sur le côté de préhension (34) fourni sur la barre de manoeuvre (36) et connecté électriquement à un composant électrique sur le flanc de carrosserie (21, 51, 82, 83) fourni dans le corps de véhicule par un faisceau de cables (81); et
un élément de recouvrement de partie avant (11) qui héberge le tuyau d'amenée (62) et le faisceau de cables (81),
**caractérisé en ce que** l'élément de recouvrement de partie avant est fixé à la barre de manoeuvre (36) afin de tourner avec elle.

2. Motocycle de type scooter (1) selon la revendication 1,
dans lequel l'élément de recouvrement de partie avant (11) est constitué d'une partie de recouvrement de côté avant (12) et une partie de recouvrement de côté arrière (13).

3. Motocycle de type scooter (1) selon la revendication 1 ou 2,
dans lequel, lorsque vue à partir du dessus d'une ligne d'extension de l'axe central de l'arbre de direction (71), l'élément de recouvrement de partie avant (11) couvrant au moins une portion d'une partie supérieure du tuyau d'amenée (62).

4. Motocycle de type scooter (1) selon les revendications 1, 2 ou 3,
dans lequel la barre de manoeuvre (36) est disposée au-dessus d'une extrémité supérieure de l'élément de recouvrement de partie avant (11).

5. Motocycle de type scooter (1) selon l'une quelconque des revendications précédentes,
dans lequel le tuyau d'amenée (62) est disposé au niveau de la carrosserie (61) de sorte qu'une extrémité inférieure de l'arbre de direction (71) est positionnée plus loin en avant depuis une extrémité supérieure de l'arbre de direction (71) par rapport au véhicule, et
dans lequel l'élément de recouvrement de partie avant (11) est formé de sorte que la taille du véhicule dans une direction avant-arrière au niveau du côté de l'extrémité supérieure de l'arbre de direction (71) est plus petite que la taille du véhicule dans une direction avant-arrière au niveau du côté de l'extrémité inférieure de l'arbre de direction (71).

6. Motocycle de type scooter (1) selon l'une quelconque des revendications précédentes,
dans lequel l'élément de recouvrement de partie avant (11) est formé de sorte que la distance dans une direction horizontale entre un bord de fuite de l'élément de recouvrement de partie avant (11) de la carrosserie et une extrémité supérieure de l'arbre de direction (71) est plus petite que la distance dans une direction horizontale entre un bord de fuite de l'élément de recouvrement de partie avant (11) de la carrosserie et une extrémité inférieure de l'arbre de direction (71).

7. Motocycle de type scooter (1) selon l'une quelconque des revendications précédentes,
dans lequel le véhicule inclut en outre une paire de fourches avant (73) supportant une roue avant (72), et
dans lequel la taille de l'élément de recouvrement de partie avant dans la direction de la largeur du véhicule est substantiellement égale à la distance entre les bords extérieurs de la paire des fourches avant (73).

8. Motocycle de type scooter (1) selon la revendication 7,
dans lequel le véhicule inclut en outre un té de fourche inférieur (74) soutenant de manière fixe les fourches avant (73) et fixé à une extrémité inférieure de l'arbre de direction (71), et
dans lequel l'élément de recouvrement de partie avant (11) couvre une partie supérieure du té de fourche inférieur (74).

9. Motocycle de type scooter (1) selon l'une quelconque des revendications précédentes, comprenant en outre:
un élément de fixation de poignée (35), disposé à une extrémité supérieure de l'arbre de direction (71) et fixé à l' arbre de direction (71),
une poignée (31), constituée par la barre de manoeuvre (36), fixée à l'élément de fixation de la poignée (35),
un té de fourche inférieur (74), fixé à une extrémité inférieure de l'arbre de direction (71), et
un cadre auxiliaire (41) ayant une extrémité supérieure fixée à la poignée (31) et une extrémité inférieure fixée au té de fourche inférieur (74),
dans lequel la partie avant (11) est fixée au cadre auxiliaire (41) et supportée afin de trourner ensemble avec la poignée (31).

10. Motocycle de type scooter (1) selon l'une des revendications précédentes,
dans lequel le composant électrique de flanc de carrosserie du véhicule (21) est disposé au niveau d'une partie intérieure de l'élément de recouvrement de partie avant (11) ensemble avec le faisceau de cables (81) s'étendant depuis le composant électrique de flanc de carrosserie du véhicule (21).

11. Motocycle de type scooter (1) selon l'une quelconque des revendications précédentes,
dans lequel le composant électrique de flanc de carrosserie du véhicule comprend un commutateur principal (21).

12. Motocycle de type scooter (1) selon la revendication 11,
dans lequel le commutateur principal (21) est disposé latéralement de l'arbre de direction (71) par rapport au véhicule.

13. Motocycle de type scooter (1) selon la revendication 11 ou 12,
dans lequel le commutateur principal (21) est disposé à une position plus basse que la barre de manoeuvre (36) .

14. Motocycle de type scooter (1) selon les revendications 11, 12 ou 13,
dans lequel, vu du dessus du véhicule, le commutateur principal (21) est disposé de sorte à ce qu'au moins une portion du commutateur principal (21) est positionné plus loin en avant depuis le bord de fuite de la barre de manoeuvre (36) par rapport au véhicule.

15. Motocycle de type scooter (1) selon l'une quelconque des revendications 11 à 14,
dans lequel, vu du dessus d'une ligne d'extension de l'axe central de l'arbre de direction (71), le commutateur principal (21) est disposé de sorte à ce qu'au moins une portion du commutateur principal (21) est positionnée plus loin en avant depuis le bord de fuite de la barre de manoeuvre (36).

16. Motocycle de type scooter (1) selon l'une quelconque des revendications 11 à 15,
dans lequel le commutateur principal (21) est disposé à une position supérieure plus haute ou plus basse qu'une partie de fixation où l'élément de fixation de la poignée (35) est fixé à l'arbre de direction (71).

17. Motocycle de type scooter (1) selon l'une quelconque des revendications 11 à 16,
dans lequel une partie fonctionnelle (25) du commutateur principal (21) est disposé à un angle prédéterminé par rapport à l'axe central de l'arbre de direction (71).

18. Motocycle de type scooter (1) selon la revendication 17,
dans lequel la partie fonctionnelle (25) est disposée pour faire face au conducteur .

19. Motocycle de type scooter (1) selon l'une quelconque des revendications précédentes, comprenant en outre:
une paire de fourches avant (73) supportant une roue avant (72); et
un té de fourche inférieur (74) maintenant de manière fixe les fourches avant (73) et fixé à une extrémité inférieure de l'arbre de direction (71),
dans lequel le composant électrique de flanc de carrosserie du véhicule comprend un phare avant (83), et
dans lequel le phare avant (83) est disposé au niveau d'une partie avant inférieure d'une surface extérieure de l'élément de recouvrement de partie avant recouvrant une partie supérieure du té de fourche inférieur (74).

20. Motocycle de type scooter (1) selon l'une quelconque des revendications précédentes,
dans lequel le composant électrique de flanc de carrosserie du véhicule comprend une unité métrique (51), et,
dans lequel l'unité métrique (51) est disposée au niveau d'une partie avant supérieure de la surface latérale de l'élément de recouvrement de partie avant (11).

21. Motocycle de type scooter (1) selon l'une quelconque des revendications précédentes,
dans lequel l'élément de recouvrement de partie avant (11) constitue une apparence extérieure d'une partie avant du corps du véhicule.
